## Europäisches Patentamt
## European Patent Office
## Office européen des brevets

(19)

(11) Veröffentlichungsnummer: **0 111 021**
**A1**

(12) # EUROPÄISCHE PATENTANMELDUNG

(21) Anmeldenummer: 82111378.4

(22) Anmeldetag: 08.12.82

(51) Int. Cl.³: **G 06 F 7/50**

(43) Veröffentlichungstag der Anmeldung:
20.06.84 Patentblatt 84/25

(84) Benannte Vertragsstaaten:
DE FR GB IT NL

(71) Anmelder: Deutsche ITT Industries GmbH
Hans-Bunte-Strasse 19 Postfach 840
D-7800 Freiburg(DE)

(84) Benannte Vertragsstaaten:
DE

(71) Anmelder: ITT INDUSTRIES INC.
320 Park Avenue
New York, NY 10022(US)

(84) Benannte Vertragsstaaten:
FR GB IT NL

(72) Erfinder: Nopper, Guido H., Dipl.-Ing.
Bergstrasse 15
D-7803 Gundelfingen(DE)

(74) Vertreter: Stutzer, Gerhard, Dr.
Deutsche ITT Industries GmbH Patent- und
Lizenzabteilung Hans-Bunte-Strasse 19 Postfach 840
D-7800 Freiburg(DE)

(54) **Binärer MOS-Paralleladdierer mit geschaltetem Übertrag.**

(57) Ein in MOS-Technik realisierter, schneller Paralleladdierer für zwei im natürlichen Dualcode mit n Stellen dargestellte Zahlen besteht aus Stufen (m...j, i, 0) mit gleichartiger Innenschaltung, wobei der Übertragseingang (ej) einer Stufe (j) mit dem Übertragsausgang (di) der nächstniederen Stufe (i) verbunden ist und der Übertragseingang (e0) der niederstwertigen Stufe am Schaltungsnullpunkt liegt. Die einzelnen Stufen enthalten jeweils: ein erstes Komplexgatter (1j), an dessen Ausgang das Summensignal ($\overline{sj}$ bzw. si) auftritt, und das zwei UND-Verknüpfungen (11j, 12j) sowie eine ODER-Verknüpfung (14j) enthält, wobei die Ausgänge der UND-Verknüpfungen an den Eingängen der NOR-Verknüpfung (13j) liegen; ein zweites Komplexgatter mit einer NOR-Verknüpfung (23j) und einer UND-Verknüpfung (21j), deren Ausgang am ersten Eingang der NOR-Verknüpfung (23j) - deren Ausgang der Übertragsausgang (dj) ist - und deren erster Eingang am Übertragseingang (ej) liegt; ein NAND-Gatter (6j) und ein NOR-Gatter (3j) mit jeweils zwei Eingängen für die beiden nichtinvertierten bzw. invertierten Stellensignale (aj, bj bzw. $\overline{ai}$, $\overline{bi}$), die abwechselnd benachbarten Stufen (j, i) zugeführt sind, wobei der Ausgang des NAND-Gatters (6j) über einen Inverter (4j) am zweiten Eingang der NOR-Verknüpfung (23j) wie am zweiten Eingang der ODER-Verknüpfung (14j) liegt und der des NOR-Gatters (3j) mit dem zweiten Eingang der UND-Verknüpfung (21j) verbunden ist.

FIG.1

Croydon Printing Company Ltd.

G.H.Nopper-3

Fl 1162 EP
Dr.Rl/bk
30. November 1982

**Binärer MOS-Paralleladdierer mit geschaltetem Übertrag**

Die Erfindung betrifft monolithisch mittels Isolierschicht-Feldeffekttransistoren gleicher Leitungsart (n- oder p-Kanal) vom Enhancement- bzw. Depletion-Typ integrierte n-stufige Paralleladdierer für zwei im natürlichen Dualcode mit n Stellen dargestellte Zahlen, bei denen der Übertragseingang einer Stufe mit dem Übertragsausgang der nächstniederen Stufe jeweils verbunden ist, vgl. den Oberbegriff des Anspruchs 1.

Ein derartiger Paralleladdierer ist aus der Offenlegungsschrift DE 30 35 631 A1 (=EP 48352 A1) bekannt; sie ermöglicht die Realisierung eines nach dem Prinzip des geschalteten Übertrags (switched carry) arbeitenden Paralleladdierers in MOS-Technik.

Die Bildung des Übertragssignals jeder Stufe erfolgt dabei mit großer Schaltgeschwindigkeit, weil pro Stufe im Signalweg für das Übertragssignal nur ein Inverter und ein Transfertransistor in Serie geschaltet sind. Allerdings ist die Übertragsausgangsleitung durch zwei weitere Transfertransistoren auch kapazitiv belastet.

Nachteilig ist bei der bekannten Anordnung,daß zu deren Aufbau Stufen mit unterschiedlicher Innenschaltung benötigt werden und daß an jede Stufe sowie die nicht- als auch die invertierten Stellensignale anzulegen sind.

Die in den Ansprüchen gekennzeichnete Erfindung löst demgegenüber die Aufgabe, einen binären MOS-Paralleladdierer

G.H.Nopper-3                                    Fl 1162 EP

anzugeben, dessen Stufen gleichartig aufgebaut sind und der gegenüber dem bekannten Paralleladdierer einen geringeren Flächenbedarf und eine höhere Schaltgeschwindigkeit für das Übertragssignal aufweist.

Ein Vorteil der Erfindung besteht darin, daß im Signalweg des Übertragssignals einer Stufe nur noch ein Gatter angeordnet ist, an dessen Ausgang außer dem Eingang der nächsthöheren Stufe* keine belastenden Bauelemente und somit keine Kapazitäten angeschlossen sind. Ferner braucht eine Stufe weniger Strom und weniger Fläche.

   * und einem Eingang des ersten Komplexgatters Die Erfindung wird nachstehend anhand der Figuren der Zeichnung näher erläutert.

Fig. 1  zeigt das Schaltbild einer einzelnen Stufe eines Ausführungsbeispiels des Paralleladdierers nach der Erfindung,  und

Fig. 2  zeigt als Ausführungsbeispiel das Blockschaltbild eines aus mehreren Stufen aufgebauten Volladdierers.

Für das Ausführungsbeispiel ist vorausgesetzt, daß die Binärsignale in positiver Logik verarbeitet werden.

In den Figuren ist ferner die Darstellung mittels der Schaltsymbole für Gatter so gewählt, daß nur solche Gatter einen Arbeitswiderstand aufweisen,deren Ausgangsleitung am Berührungspunkt mit dem Halbkreis des Gatters den zur Darstellung einer Invertierung üblichen Punkt aufweist. Aus diesem Grund wird für die Zwecke der vorliegenden Beschreibung auch zwischen einem Gatter, daß eine derartige Schaltung mit einem einzigen Arbeitswiderstand ist und einer Verknüpfung als solcher unterschieden, die lediglich Teil eines Gatters ist.

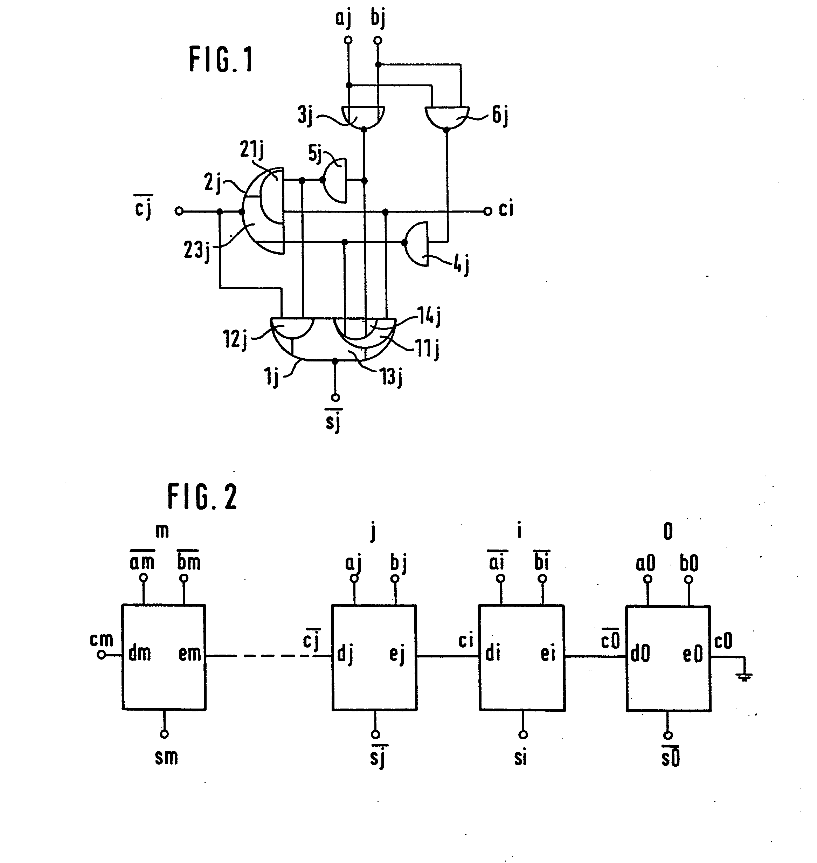

Die Fig. 1 zeigt das Schaltbild der Stufe j eines Ausführungsbeispiels. Dieser Stufe sind die nichtinvertierten Stellensignale aj, bj zugeführt. Die Stufe j enthält das erste Komplexgatter 1j mit der ersten und zweiten UND-Verknüpfung 11j, 12j mit jeweils zwei Eingängen und der ersten NOR-Verknüpfung 13j mit zwei Eingängen, von denen der eine am Ausgang der ersten UND-Verknüpfung 11j und der andere am Ausgang der zweiten UND-Verknüpfung 12j liegt. Am Ausgang des ersten Komplexgatters 1j tritt dabei das invertierte Summensignal $\overline{sj}$ auf, während der Übertragseingang ej (siehe Fig. 2), dem das Übertragsignal ci der nächstniederen Stufe i (siehe Fig. 2), das nichtinvertiert ist, zugeführt ist, am ersten Eingang der ersten UND-Verknüpfung 11j angeschlossen ist.

Im ersten Komplexgatter ist ferner die erste ODER-Verknüpfung 14j mit zwei Eingängen enthalten, deren erster am Ausgang des NOR-Gatters 3j und deren zweiter am Ausgang des ersten Inverters 4j liegt. Der Ausgang der ODER-Verknüpfung 14j ist mit dem zweiten Eingang der ersten UND-Verknüpfung 11j verbunden.

Die Stufe j enthält ferner das zweite Komplexgatter 2j mit der dritten UND-Verknüpfung 21j und der zweiten NOR-Verknüpfung 23j mit jeweils zwei Eingängen, wobei der erste Eingang der dritten UND-Verknüpfung 21j am Übertragseingang ej und deren Ausgang am ersten Eingang der zweiten NOR-Verknüpfung 23j liegt.

In der Stufe j ist ferner das NAND-Gatter 6j enthalten, das wie das NOR-Gatter 3j jeweils zwei Eingänge für die beiden Stellensignale aj, bj aufweist. Der Ausgang des NAND-Gatters 6j liegt über den ersten Inverter 4j am zweiten Eingang der zweiten NOR-Verknüpfung 23j, deren

- 4 -

G.H.Nopper-3                                    Fl 1162 EP

Ausgang der Übertragsausgang dj ist, an dem in invertierter
Form das Übertragssignal $\overline{cj}$ auftritt.

Der Ausgang des NOR-Gatters 3j liegt über den zweiten
Inverter 5j am zweiten Eingang der dritten UND-Verknüpfung 21j und am ersten Eingang der zweiten UND-Verknüpfung 12j, deren zweiter Eingang mit dem Übertragsausgang dj verbunden ist.

Die Gatter 1j, 2j, 3j und 6j sowie die Inverter 4j, 5j
sind bevorzugt so aufgebaut, daß ihre Lasttransistoren
vom Depletion-Typ und alle anderen Transistoren vom
Enhancement-Typ sind.

In Fig. 2 sind als Blockschaltbild eines Paralleladdierers
die Stufen 0, i, j, m gezeigt, dessen niederstwertige
Stufe 0 in ihrem Aufbau identisch mit dem der übrigen
Stufen i, j, m ist und deren Übertragssignal e0 am
Schaltungsnullpunkt liegt. Benachbarten Stufen sind dabei
abwechselnd die invertierten Stellensignale $\overline{ai}$, $\overline{bi}$ bzw.
die nichtinvertierten Stellensignale zugeführt. Die entstehenden Summen- bzw. Übertragssignale si, $\overline{sj}$; ci, $\overline{cj}$
sind dabei abwechselnd nichtinvertiert bzw. invertiert,
und zwar derart, daß bei nichtinvertierten Stellensignalen
ein invertiertes Summen- und ein invertiertes Übertragssignal und umgekehrt entsteht.

G.H.Nopper-3

Fl 1162 EP
Dr.Rl/bk
30. November 1982

Patentansprüche

1. Monolithisch mittels Isolierschicht-Feldeffekttransistoren gleicher Leitungsart (n- oder p-Kanal) vom Enhancement- bzw. Depletion-Typ integrierter n-stufiger Paralleladdierer für zwei im natürlichen Dualcode mit n Stellen dargestellte Zahlen, bei dem der Übertragseingang (ej) einer Stufe (j) mit dem Übertragsausgang (di) der nächstniederen Stufe (i) jeweils verbunden ist und bei dem alle Stufen außer der niederstwertigen Stufe (0) folgende Teilschaltungen enthalten:

- ein erstes Komplexgatter (1j), an dessen Ausgang das Summensignal (sj) auftritt und das eine erste und eine zweite UND-Verknüpfung (11j, 12j) mit jeweils zwei Eingängen und eine erste NOR-Verknüpfung (13j) mit zwei Eingängen enthält, von denen der eine am Ausgang der ersten UND-Verknüpfung (11j) und der andere am Ausgang der zweiten UND-Verknüpfung (12j) liegt, wobei der erste Eingang der ersten UND-Verknüpfung (11j) am Übertragseingang (ej) angeschlossen ist,

- ein zweites Komplexgatter (2j), das eine dritte UND-Verknüpfung (21j) und eine zweite NOR-Verknüpfung (23j) mit jeweils zwei Eingängen enthält, wobei der erste Eingang der dritten UND-Verknüpfung (21j) am Übertragseingang (ej) und deren Ausgang am ersten Eingang der zweiten NOR-Verknüpfung (23j) liegt,

- ein NOR-Gatter (3j) mit zwei Eingängen für die beiden Stellensignale (aj, bj) und

- einen ersten sowie zweiten Inverter (4j,5j),

G.H.Nopper-3                    Fl 1162 EP

gekennzeichnet durch folgende Merkmale:

- benachbarten Stufen (i, j) sind abwechselnd die invertierten Stellensignale ($\overline{ai}$, $\overline{bi}$) bzw. die nichtinvertierten Stellensignale (aj, bj) zugeführt,

- die niederstwertige Stufe (0) ist in ihrem Aufbau identisch mit den übrigen Stufen (i, j, m), und ihr Übertragseingang (e0) liegt am Schaltungsnullpunkt,

- jede Stufe (j) enthält ferner folgende Teilschaltungen:

-- ein NAND-Gatter (6j) mit zwei Eingängen für die Stellensignale ($\overline{ai}$, $\overline{bi}$ bzw. aj, bj), dessen Ausgang über den ersten Inverter (4j) am zweiten Eingang der zweiten NOR-Verknüpfung (23j) liegt, deren Ausgang der Übertragsausgang (dj) ist und

-- im ersten Komplexgatter (1j) eine ODER-Verknüpfung (14j) mit zwei Eingängen, deren erster am Ausgang des NOR-Gatters(3j) und deren zweiter am Ausgang des ersten Inverters (4j) liegt, und

- jede Stufe hat ferner die folgenden Schaltungsmerkmale:

-- der Ausgang der ODER-Verknüpfung (14j) liegt am zweiten Eingang der ersten UND-Verknüpfung (11j), und

-- der Ausgang des NOR-Gatters (3j) liegt über den zweiten Inverter (5j) am zweiten Eingang der dritten UND-Verknüpfung (21j) und am ersten Eingang der zweiten UND-Verknüpfung (12j), deren zweiter Eingang mit dem Übertragsausgang (dj) verbunden ist.


2. Paralleladdierer nach Anspruch 1, dadurch gekennzeichnet, daß die Lasttransistoren der Gatter (1j, 2j, 3j, 6j) und der Inverter (4j, 5j) Depletion-Transistoren und alle übrigen Transistoren Enhancement-Transistoren sind.

FIG.1

FIG.2

**0111021**

**Europäisches Patentamt**

# EUROPÄISCHER RECHERCHENBERICHT

EP  82 11 1378

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 048 821  (UHLENHOFF) * Figur 1; Seite 3, Zeile 34 - Seite 6, Zeile 2 * | 1 | G 06 F    7/50 |
| | --- | | |
| A | SIEMENS FORSCHUNGS- UND ENTWICKLUNGSBERICHTE, Band 5, Nr. 6, Dezember 1976, Seiten 324-326, Berlin, DE. D. EICHRODT: "Rewarding application of transmission gates in MOS-LSI circuits" * Figur 2b; Seite 324, rechte Spalte, letzter Absatz * | 1 | |
| | ----- | | |

| | RECHERCHIERTE SACHGEBIETE (Int. Cl. 3) |
|---|---|
| | G 06 F    7/50 |

Der vorliegende Recherchenbericht wurde für alle Patentansprüche erstellt.

| Recherchenort DEN HAAG | Abschlußdatum der Recherche 28-07-1983 | Prüfer FORLEN G.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82